# EUROPEAN PATENT APPLICATION

(11) **EP 4 336 629 A2**
(43) Date of publication of application: **13.03.2024**
(21) Application number: 23193622.0
(22) Date of filing: 28.08.2023
(51) Int. Cl.: H01M 50/103, H01M 50/15, H01M 50/148, H01M 50/164, H01M 50/548, H01M 50/553

(54) **BATTERY CELL**

(30) Priority: 07.09.2022 KR 20220113658; 19.06.2023 KR 20230078030
(71) Applicant: SK On Co., Ltd., Seoul 03161 (KR)
(72) Inventor: SHIN, Jae Sik, 34124 Daejeon (KR); JU, Seung Hoon, 34124 Daejeon (KR); BYUN, Jae Gyu, 34124 Daejeon (KR); SEO, Gi Jeong, 34124 Daejeon (KR)
(74) Representative: Bird & Bird LLP

(57) **Abstract**

In some implementations, a battery cell includes: an electrode assembly including a plurality of pole plates; one or more protective assemblies disposed on at least one side of the electrode assembly; and a case having an internal space in which the electrode assembly is accommodated, wherein the one or more protective assemblies includes: a protective frame including an insulating material; and a connection unit coupled to the protective frame and electrically connected to the electrode assembly.

## Description

### TECHNICAL FIELD

The technology and implementations disclosed in this patent document generally relate to a battery cell.

### BACKGROUND

Unlike primary batteries, since secondary batteries (battery cells) are convenient to be charged or discharged, they have attracted significant attention as power sources for various mobile devices and electric vehicles.

Such a secondary battery may have a structure in which an electrode assembly, formed by stacking a positive pole plate, a negative pole plate and a separator, or winding the same in a roll shape, is accommodated in a case.

When an impact is applied to a battery cell, the impact may be transmitted to the electrode assembly inside the battery cell, which may cause damage to the electrode assembly. Furthermore, the damage to the electrode assembly may cause a short circuit with an internal surface of the case, which may cause an operation abnormality of the battery cell.

Therefore, there is a need for a structure capable of protecting the electrode assembly from external impacts and stably maintaining an electrical connection between the electrode assembly and a terminal of the battery cell.

### SUMMARY

The disclosed technology can be implemented in some embodiments to provide a battery cell having a protective structure configured to protect an electrode assembly.

Furthermore, another aspect of the disclosed technology is to provide a battery cell having a structure configured to further increase the rigidity of the protective structure.

Furthermore, another aspect of the disclosed technology is to provide a battery cell configured to increase energy density through a simple connective structure between an electrode assembly and a terminal of the battery cell.

A battery cell according to the disclosed technology includes: an electrode assembly including a plurality of pole plates; one or more protective assemblies disposed on at least one side of the electrode assembly; and a case having an internal space in which the electrode assembly is accommodated, wherein the one or more protective assemblies include: a protective frame including an insulating material; and a connection unit coupled to the protective frame and electrically connected to the electrode assembly.

In some embodiments of the disclosed technology, the battery cell further includes: a cap assembly coupled to the case and having a terminal disposed therein, wherein the connection unit is electrically connected to the terminal and the electrode assembly, respectively.

In some embodiments of the disclosed technology, the connection unit includes: a current collecting member electrically connected to the electrode assembly; and a connection member configured to electrically connect the current collecting member and the terminal.

In some embodiments of the disclosed technology, the protective frame includes a coupling protrusion inserted into the current collecting member.

In some embodiments of the disclosed technology, the current collecting member includes a material having rigidity higher than that of the insulating material of the protective frame.

In some embodiments of the disclosed technology, at least a portion of the connection member is inserted into the terminal.

In some embodiments of the disclosed technology, the terminal includes: a rivet having an insertion hole into which the connection member is inserted; and a terminal portion to which the rivet is coupled.

In some embodiments of the disclosed technology, the rivet and the terminal portion are formed of different materials.

In some embodiments of the disclosed technology, the electrode assembly further includes an uncoated portion which is not coated with an active material, and the uncoated portion is electrically connected to the current collecting member.

In some embodiments of the disclosed technology, at least a portion of the uncoated portion is disposed between the current collecting member and the cap assembly.

In some embodiments of the disclosed technology, the protective frame includes a through-hole through which an electrolyte passes.

In some embodiments of the disclosed technology, the cap assembly includes an electrolyte inlet into which the electrolyte is injected, wherein the electrolyte inlet is disposed to face the through-hole.

In some embodiments of the disclosed technology, the protective frame includes: a body portion facing the electrode assembly in a first direction; and one or more bend portions extending from the body portion and facing the electrode assembly in a second direction, perpendicular to the first direction.

In some embodiments of the disclosed technology, the one or more bend portions are disposed to cover edges of the electrode assembly.

In some embodiments of the disclosed technology, the battery cell further includes: a first cap assembly and a second cap assembly coupled to both sides of the case, wherein the one or more protective assemblies include: a first protective assembly facing the first cap assembly and a second protective assembly facing the second cap assembly.

A battery cell according to embodiments includes a protective assembly having high rigidity, thereby effectively protecting an electrode assembly from external impacts.

Furthermore, a battery cell according to embodiments includes a connection member in which at least a portion thereof is inserted into a terminal, thereby reducing wasted space inside a case and increasing energy density.

Furthermore, in a battery cell according to embodiments, a connection member and a terminal may be electrically connected to each other in the process of assembling a cap assembly to a case, thereby simplifying an assembly process.

### BRIEF DESCRIPTION OF DRAWINGS

Certain aspects, features, and advantages of the disclosed technology are illustrated by the following detailed description with reference to the accompanying drawings.
FIG. 1 is a perspective view of a battery cell according to an embodiment.
FIG. 2 is an exploded perspective view of a battery cell according to an embodiment.
FIG. 3 is an exploded perspective view of a first cap assembly according to an embodiment.
FIG. 4 is an exploded perspective view of a second cap assembly according to an embodiment.
FIG. 5 is an exploded perspective view of a protective assembly according to an embodiment.
FIG. 6 is a reference view illustrating a state in which an electrode assembly and a protective assembly are coupled to each other according to an embodiment.
FIG. 7 is a reference view illustrating a state in which a cap assembly is coupled to a case according to an embodiment.
FIG. 8 is a cross-sectional view of part I-I' of FIG. 1.
FIG. 9 is an enlarged view of part A of FIG. 8.
FIG. 10 is a cross-sectional view of part II-II' of FIG. 1.

### DETAILED DESCRIPTION

Prior to describing the exemplary embodiments in detail, it should be understood that the terms used in the specification and the appended claims should not be construed as being limited to general and dictionary meanings, but should be interpreted based on the meanings and concepts corresponding to technical aspects of the present disclosure on the basis of the principle that the inventor is allowed to define terms appropriately for the best explanation. Therefore, it should be understood that the embodiments described in this specification and the configurations illustrated in the drawings are only the most desirable embodiments of the disclosed technology and do not represent all the technical concepts of disclosed technology, and accordingly, there may be various equivalents and variations that can replace the embodiments and the configurations of the disclosed technology at the time of this application.

The same reference numeral or symbol written in each accompanying drawing of the specification refers to parts or components that perform substantially the same function. For convenience of explanation and understanding, the disclosed technology is described using the same reference numeral or symbol even in different exemplary embodiments. That is, even if a plurality of drawings illustrate components having the same reference number, all of the plurality of drawings do not refer to an embodiment.

In this specification, the singular also includes the plural unless specifically stated otherwise in the phrase. It will be further understood that the terms "comprises," "comprising," "includes" and/or "including," when used herein, specify the presence of stated features, integers, steps, operations, elements, components and/or combinations thereof, but do not preclude the presence or addition of one or more other features, integers, steps, operations, elements, components, and/or groups thereof.

Furthermore, it should be noted in advance that the expressions such as "above," "upper," "below," "beneath," "lower," "side," "front," and "rear" are based on the direction illustrated in the drawings, and may be expressed differently if the direction of the object is changed.

Furthermore, in the present specification and claims, terms including ordinal numbers such as "first" and "second" may be used to distinguish between components. These ordinal numbers are used to distinguish the same or similar components from each other, and the meaning of the terms should not be construed as limited by the use of these ordinal numbers. For example, the components combined with these ordinal numbers should not be construed as limiting the order of use or arrangement of the components. If necessary, the ordinal numbers may be used interchangeably.

Hereinafter, with reference to the drawings, specific embodiments of the present disclosure will be described. However, the scope of the present disclosure is not limited to the suggested embodiments. For example, those skilled in the art who understand the idea of the present disclosure may propose other embodiments included within the scope of the idea of the present disclosure by adding, modifying, or deleting components, but the embodiments described herein have been provided so that this disclosure will be thorough and complete, and will convey the full scope of the disclosure to one of ordinary skill in the art. In the drawings, the shapes and dimensions of elements may be exaggerated for clarity.

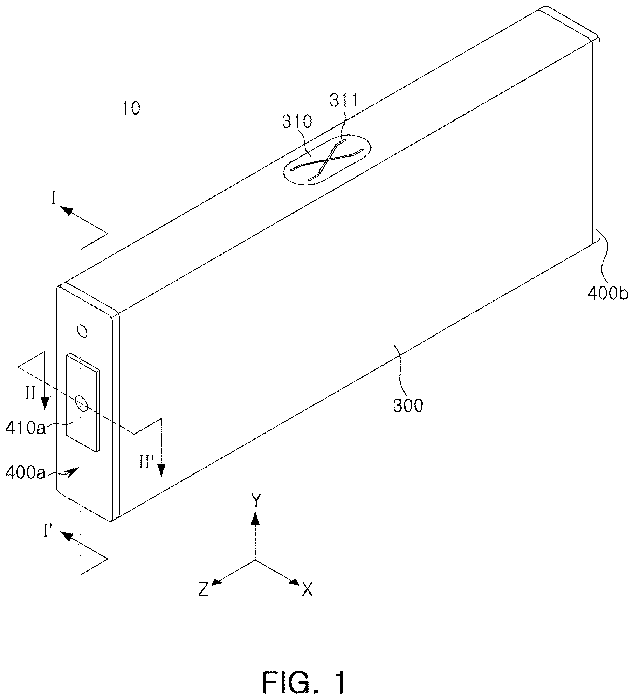

FIG. 1 is a perspective view of a battery cell 10.

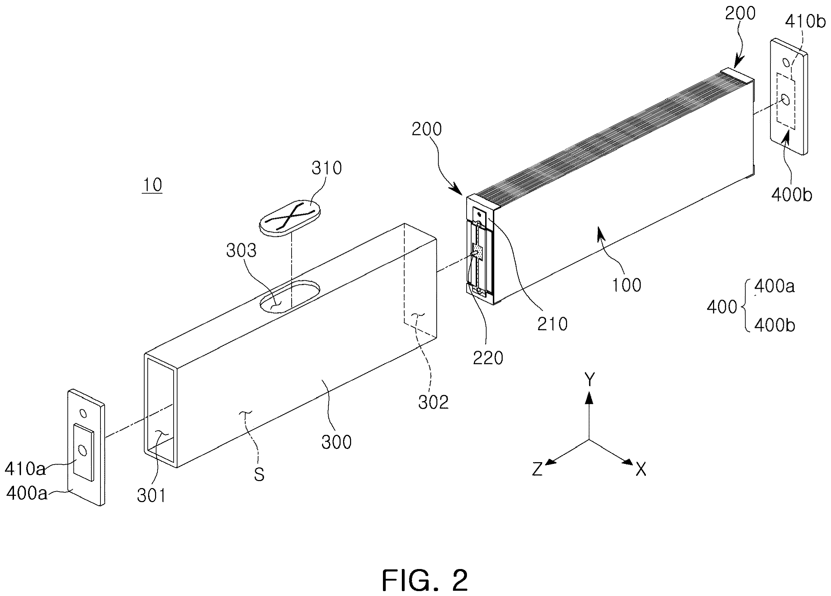

FIG. 2 is an exploded perspective view of a battery cell 10.

In embodiments, the battery cell 10 may be a rechargeable secondary battery. The battery cell 10 may be a secondary battery having an angular appearance as illustrated in FIGS. 1 and 2, but a specific appearance thereof is not limited to those illustrated in the drawings. For example, the battery cell may be a cylindrical secondary battery or a pouch type secondary battery.

In embodiments, the battery cell 10 may include an electrode assembly 100, a case 300 having an internal space in which the electrode assembly 100 is accommodated, and one or more cap assemblies coupled to the case 300 to close the internal space of the case 300.

The electrode assembly 100 may include a plurality of pole plates and a separator disposed between the pole plates. For example, the electrode assembly 100 may be formed by stacking a plurality of positive pole plates, a plurality of negative pole plates, and one or more separators in one direction. Alternatively, the electrode assembly 100 may have a jelly roll structure in which the positive pole plate, the negative pole plate, and the separator interposed therebetween are wound.

In some embodiments, the battery cell 10 may include one or more electrode assemblies 100. When the battery cell 10 has a plurality of electrode assemblies, the electrode assemblies may be stacked and disposed in one direction (e.g., in an X-axis direction).

The case 300 may have an internal space S in which the electrode assembly 100 and an electrolyte (not illustrated) may be accommodated.

The case 300 may include a material having sufficient rigidity to protect the internal electrode assembly 100 disposed thereinside and maintain an external shape of an entire battery cell 10. For example, at least a portion of the case 300 may be formed of a metal material such as aluminum, iron, or stainless steel. However, the material of the case 300 is not limited thereto, and may be formed of any material as long as it has rigidity capable of maintaining the external shape of the battery cell 10 and protecting the internal electrode assembly.

The case 300 may have an internal space S and may have a shape in which at least one side thereof is open. For example, referring to FIGS. 1 and 2, the case 300 may have a hexahedral shape in which a first opening 301 and a second opening 302 are formed at both ends in a longitudinal direction (e.g., a Z-axis direction). The internal space S may be formed between the first opening 301 and the second opening 302, and the electrode assembly 100 may be accommodated in the internal space S.

In the following description, embodiments will be described on the premise that the case 300 has a hexahedral shape in which both sides thereof is open as illustrated in FIG. 2. However, a specific shape of the case 300 is not limited to those illustrated in the drawings. The case 300 may be configured in any shape as long as it secures the internal space S into which the electrode assembly 100 may be inserted and accommodated. For example, the case may have a circular column shape in which an upper surface or a lower surface thereof is open, or a polyhedron shape in which at least one side is open.

In embodiments, the battery cell 10 may include one or more cap assemblies 400a and 400b coupled to the case 300. For example, referring to FIG. 2, a first cap assembly 400a and a second cap assembly 400b may be coupled with the first opening 301 and the second opening 302 of the case 300 to close the internal space S of the case 300.

Each of the cap assemblies 400a and 400b may include cap plates 420a and 420b coupled to the case 300 and terminals 410a and 410b disposed in the cap plates 420a and 420b.

The terminals 410a and 410b may be electrically connected to the electrode assembly 100 in the case 300. The electrode assembly 100 may be electrically connected to other components (e.g., a conductive busbar) outside the battery cell 10 through the terminals 410a and 410b.

The terminals 410a and 410b may be fixedly disposed on the cap plates 420a and 420b. The cap plates 420a and 420b may be coupled to the case 300 to form at least one side surface of the battery cell 10.

The cap plates 420a and 420b may include a material having a predetermined rigidity to close one open side of the case 300 and protect the electrode assembly 100 disposed in the internal space S. For example, at least a portion of the cap plates 420a and 420b may be formed of the same material as the case 300.

The cap assemblies 400a and 400b may be welded and coupled to the case 300. For example, while the cap plates 420a and 420b of the cap assembly 400a and 400b cover the openings 301 and 302 of the case 300, a portion thereof in contact with the case 300 may be laser welded to the case 300. However, a coupling method between the cap assemblies 400a and 400b and the case 300 is not limited to the aforementioned description.

In one battery cell 10, a plurality of cap assemblies 400a and 400b may be provided. For example, the cap assemblies 400a and 400b may include a first cap assembly 400a and a second cap assembly 400b in which the first terminal 410a and the second terminal 410b having opposite polarities are disposed, respectively.

As illustrated in FIGS. 1 and 2, the first cap assembly 400a and the second cap assembly 400b may be coupled to both ends of the case 300. For example, the first cap assembly 400a may have a first terminal 410a as a negative pole terminal and may be coupled and welded to the first opening 301 of the case 300 to close the first opening 301. The second cap assembly 400b may have a second terminal 410b as a positive pole terminal and may be coupled and welded to the second opening 302 of the case 300 to close the second opening 302. Accordingly, the first cap assembly 400a and the second cap assembly 400b may close both sides of the case 300 in which the electrode assembly 100 is accommodated.

A laser welding method may be applied to the coupling of the cap assembly 400 and the case 300, but a specific coupling method is not limited thereto.

However, the position of the cap assembly 400 is not limited to those illustrated in FIGS. 1 and 2. For example, unlike those illustrated in FIGS. 1 and 2, in the battery cell 10, a plurality of cap assemblies 400a and 400b may all be disposed on the same side surface of the case 300.

The battery cell 10 may include a protective assembly 200 disposed on at least one side of the electrode assembly 100 to protect the electrode assembly 100.

The protective assembly 200 may include a protective frame 210 configured to protect the electrode assembly 100, and a connection member 220 electrically connecting the electrode assembly 100 and the terminal 410a and 410b to each other.

The protective assembly 200 may be disposed on a side of the electrode assembly 100 facing the cap assembly and may protect the electrode assembly 100 and electrically connect the electrode assembly 100 and the terminals of the cap assembly at the same time. For example, the protective frame 210 of the protective assembly 200 may prevent damage to the electrode assembly 100 by impacts applied to the battery cell by including a material that can absorb impacts, and the connection member 220 of the protective assembly 200 may electrically connect the electrode assembly and the terminals of the cap assembly by including include a conductive metal material.

Furthermore, the protective frame 210 may include an insulating material, thereby preventing an unintended short circuit between the electrode assembly 100 and the case 300.

When an impact is applied to the battery cell, an edge portion of the electrode assembly and the case may collide with each other to be damaged, and a short circuit may occur between the edge portion of the electrode assembly and the case. In order to prevent such a short circuit, the protective frame 210 may be configured to cover at least one edge of the electrode assembly. For example, an upper end and a lower end of the protective frame 210 may be disposed to surround an upper edge and a lower edge of the electrode assembly to absorb the impact applied to the battery cell and protect the edges of the electrode assembly.

At least a portion of the connection member 220 of the protective assembly 200 may be inserted into the cap assembly 400. For example, the connection member 220 may be provided in the form of a pin structure protruding in a direction oriented toward the cap assembly 400, and may be inserted into and in contact with the terminals 410a and 410b of the cap assembly 400. Accordingly, the electrode assembly 100 may be electrically connected to the terminal 410a and 410b of the cap assembly 400 through the connection member 220.

In the battery cell 10, a plurality of protective assemblies 200 may be provided. For example, referring to FIG. 2, the protective assembly 200 may be disposed to cover one side facing the cap assembly 400 and the other side, opposite to one side of the cap assembly, in the electrode assembly 100.

The cap assembly 400 may be configured to be assembled in the opening of the case 300 in a first direction (Z-axis direction), and a connection unit may be disposed to face the cap assembly 400 in the first direction (Z-axis direction). At least a portion of the connection member 220 may extend in the first direction and may be naturally inserted into the terminals 410a and 410b in the process of coupling the cap assembly 400 to the case 300.

According to the battery cell 10 of the embodiments, since the terminal 410a and 410b and the electrode assembly 100 are naturally connected to each other in the process of assembling the cap assembly 400 and the case 300, a connection process between the electrode assembly 100 and the terminals 410a and 410b may be further simplified. Furthermore, in the battery cell 10 according to embodiments, since at least a portion of the connection member 220 is inserted into the terminals 410a and 410b according to the embodiments, it is advantageous to increase energy density by reducing wasted space for a connection between the electrode assembly 100 and the terminals 410a and 410b.

Meanwhile, the battery cell 10 may further include a vent member 310 configured to discharge gas generated in the internal space S. When internal pressure of the battery cell 10 is higher than a predetermined pressure, the vent member 310 may be opened earlier than other regions of the battery cell 10 to prevent the battery cell 10 from exploding.

The vent member 310 may be coupled to the case 300. For example, the vent member 310 may be coupled to a venting hole 303 formed on a side surface of the case 300.

The vent member 310 may be coupled to the venting hole 303 to close the venting hole 303. When the internal pressure of the case 300 is lower than a preset pressure, the vent member 310 may be configured to seal the vent hole 303, thereby preventing foreign materials from flowing into the battery cell 10 via the venting hole 303 or an electrolyte inside the battery cell 10 from flowing out.

When gas is generated in the internal space S of the case 300 while the battery cell 10 is repeatedly charged and discharged and the internal pressure is higher than the preset pressure, at least a portion of the vent member 310 may be configured to be broken. For example, a notch portion 311 having a lesser thickness than those of other portions may be formed on the vent member 310. When the internal pressure of the case 300 is higher than the preset pressure, the notch portion 311 may be preferentially broken in the vent member 310, and the gas in the internal space S may be discharged to the outside of the battery cell 10 through the broken notch portion 311.

Hereinafter, the disclosed technology will be described in detail with reference to the accompanying drawings. However, this is only illustrative and the disclosed technology is not limited to the specific embodiments described as illustrative.

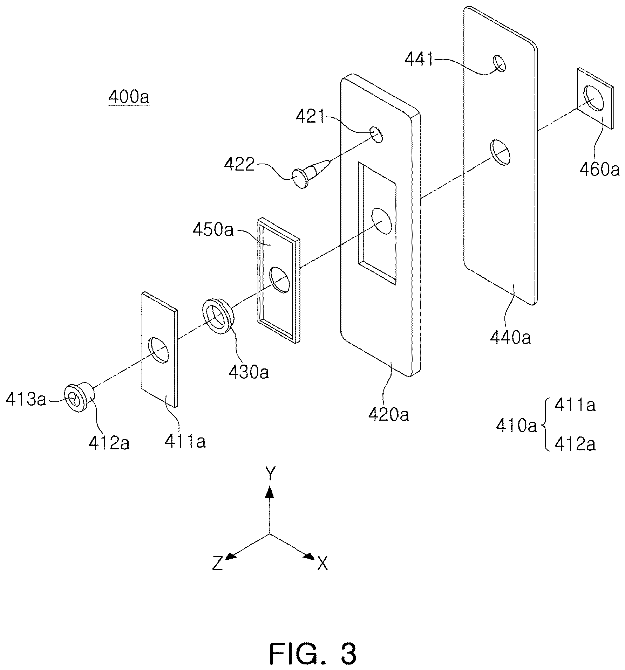

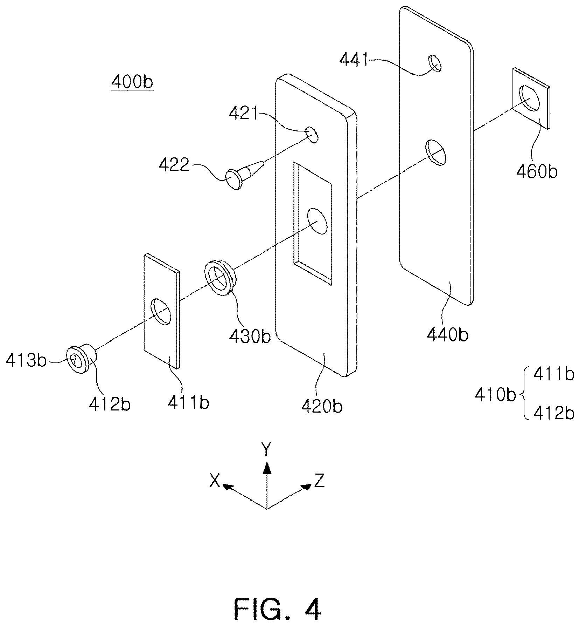

Hereinafter, a cap assembly 400 included in a battery cell 10 will be described in detail with reference to FIGS. 3 and 4.

FIG. 3 is an exploded perspective view of a first cap assembly 400a.

FIG. 4 is an exploded perspective view of a second cap assembly 400b.

The cap assemblies 400a and 400b described in FIGS. 3 and 4 may correspond to the cap assemblies 400a and 400b described in FIGS. 1 and 2, and thus, a redundant description thereof may be omitted.

The first cap assembly 400a may include a first terminal 410a electrically connected to an electrode assembly 100 and a first cap plate 420a supporting the first terminal 410a. Furthermore, the first cap assembly 400a may further include a first terminal insulator 450a and a first gasket 430a that electrically separate the first terminal 410a from the first cap plate 420a. Furthermore, the first cap assembly 400a may further include a first cap insulator 440a in which the first cap plate 420a prevents the electrode assembly 100 from being directly short-circuited.

The first terminal 410a of the first cap assembly 400a may include a first terminal portion 411a and a first rivet 412a.

The first terminal portion 411a may be disposed on the first cap plate 420a to serve as a connection terminal in which the battery cell 10 is electrically connected to an external component (e.g., a conductive busbar). To this end, the first terminal portion 411a may be formed of a plate-shaped member formed of a conductive metal such as aluminum or an aluminum alloy. However, the material of the first terminal portion 411a is not limited to aluminum.

The first rivet 412a may be coupled to the first terminal portion 411a. For example, the first rivet 412a may penetrate through the first terminal portion 411a to be riveted and coupled to the first terminal portion 411a. Furthermore, the first rivet 412a and the first terminal portion 411a may be coupled to each other by laser welding.

The first rivet 412a may penetrate through both the first terminal portion 411a and the first cap plate 420a, and an end thereof may be disposed to face one side of the electrode assembly 100.

The first rivet 412a may include a first insertion hole 413a into which a connection member 220 can be inserted. The first insertion hole 413a may have a shape of a hole penetrating through the first rivet 412a. The connection member 220 may be inserted into and bonded to the first insertion hole 413a of the first rivet 412a and may be electrically connected to the first rivet 412a.

The first rivet 412a may be formed of a material different from a material constituting the first terminal portion 411a. For example, the first terminal portion 411a may be formed of aluminum or an aluminum alloy, and the first rivet 412a may be formed of copper or a copper alloy. However, the first rivet 412a may be formed of the same material as the material constituting the first terminal portion 411a.

The first cap plate 420a may be coupled to a case 300 to support the first terminal 410a.

The first cap plate 420a may be configured to close a first opening 301 of the case 300. For example, the first cap plate 420a may be formed of a plate-shaped member and may be bonded to the case 300 by laser welding or ultrasonic welding to close the first opening 301. For ease of welding, the first cap plate 420a may be formed of the same material as the case 300. For example, both the first cap plate 420a and the case 300 may be formed of aluminum or an aluminum alloy. However, the material constituting the first cap plate 420a is not limited thereto, and may be formed of any material as long as it can close the first opening 301 of the case 300 and stably protect internal components thereof.

When the first cap plate 420a includes a conductive material, insulating members formed of an insulating material may be disposed between the first terminal 410a and the first cap plate 420a to electrically separate the first terminal 410a from the first cap plate 420a from each other. For example, referring to FIG. 3, the first terminal insulator 450a disposed on a rear surface of the first terminal portion 411a, and the first gasket 430a into which the first rivet 412a is inserted may correspond to such insulating members.

The first terminal insulator 450a may include an insulating material (e.g., a polymer), and may be disposed between the first terminal portion 411a and the first cap plate 420a and may be configured to insulate the first terminal portion 411a from the first cap plate 420a.

The first gasket 430a may include an insulating material (e.g., a polymer), and may be disposed between the first rivet 412a and the first cap plate 420a and may be configured to insulate the first rivet 412a from the first cap plate 420a. On the other hand, the first gasket 430a may be disposed to surround the first rivet 412a, and may block a gap between the first rivet 412a and the first cap plate 420a, thereby preventing foreign materials outside the battery cell 10 from flowing into the gap or an electrolyte inside the battery cell 10 from leaking through the gap.

An insulating member for preventing the first cap plate 420a from being unintentionally short-circuited with a component accommodated in the case 300 (e.g., the electrode assembly 100) may be disposed on a rear surface of the first cap plate 420a. For example, referring to FIG. 3, in the first cap assembly 400a, the first cap insulator 440a covering the rear surface of the first cap plate 420a may correspond to such an insulation member (here, the 'rear surface of the first cap plate 420a' may denote a surface facing from the first cap plate 420a to the internal space S of the case 300). The first cap insulator 440a may include an insulating material to prevent the first cap plate 420a from being short-circuited in contact with the electrode assembly 100.

The first cap assembly 400a may further include a first fixing member 460a coupled to the first rivet 412a. The first fixing member 460a may be disposed on a rear surface of the first cap plate 420a and may be coupled to an end of the first rivet 412a. The first fixing member 460a may be configured to have a width greater than a hole through which the first rivet 412a passes in the first cap plate 420a. Here, the 'width' may denote a length in a direction, perpendicular to the first direction (Z-axis direction), which is a direction in which the first rivet 412a penetrates through the first cap plate 420a. The first fixing member 460a may be coupled to an end of the first rivet 412a penetrating through the first cap assembly 400a, thereby preventing the components constituting the first cap assembly 400a from being separated from each other.

The second cap assembly 400b may include a second terminal 410b electrically connected to the electrode assembly 100 and a second cap plate 420b supporting the second terminal 410b. Furthermore, the second cap assembly 400b may further include a second gasket 430b blocking a gap between a second rivet and the second cap plate 420b. Furthermore, the second cap assembly 400b may further include a second cap insulator 440b for preventing the second cap plate 420b from being directly short-circuited with the electrode assembly 100.

The second terminal 410b of the second cap assembly 400b may include a second terminal portion 411b and a second rivet 412b.

The second terminal portion 411b may be disposed on the second cap plate 420b to serve as a connection terminal used to electrically connect the battery cell 10 to an external component (e.g., a conductive busbar). To this end, the second terminal portion 411b may be formed of a plate-shaped member formed of a conductive metal such as aluminum or an aluminum alloy. However, the material of the second terminal portion 411b is not limited to aluminum.

The second rivet 412b may be coupled to the second terminal portion 411b. For example, the second rivet 412b may penetrate through the second terminal portion 411b to be riveted and coupled to the second terminal portion 411b. Furthermore, the second rivet 412b and the second terminal portion 411b may be coupled to each other by laser welding.

The second rivet 412b may penetrate through both the second terminal portion 411b and the second cap plate 420b, and an end thereof may be disposed to face the electrode assembly 100. In this case, the first rivet 412a may be disposed to face one side of the electrode assembly 100, and the second rivet 412b may be disposed to face the other side, opposite to one side of the electrode assembly 100.

The second rivet 412b may include a second insertion hole 413b into which the connection member 220 can be inserted. The second insertion hole 413b may have a shape of a hole penetrating through the second rivet 412b. The connection member 220 may be inserted into and bonded to the second insertion hole 413b of the second rivet 412b and may be electrically connected to the second rivet 412b.

The second rivet 412b may be formed of the same material as a material constituting the second terminal portion 411b. For example, both the second terminal portion 411b and the second rivet 412b may be formed of aluminum or an aluminum alloy. However, if necessary, the second rivet 412b may be formed of a material different from the material constituting the second terminal portion 411b.

The second cap plate 420b may be coupled to the case 300 to support the second terminal 410b.

The second cap plate 420b may be configured to close a second opening 302 of the case 300. For example, the second cap plate 420b is formed of a plate-shaped member and may be bonded to the case 300 by laser welding or ultrasonic welding to close the second opening 302. For ease of welding, the second cap plate 420b may be formed of the same material as the case 300. For example, both the second cap plate 420b and the case 300 may be formed of aluminum or an aluminum alloy. However, the material constituting the second cap plate 420b is not limited thereto, and may be formed of any material as long as it can close the second opening 302 of the case 300 and stably protect internal components thereof.

The second gasket 430b may be disposed between the second rivet 412b and the second cap plate 420b, and may block a gap between the second rivet 412b and the second cap plate 420b, thereby preventing foreign materials outside the battery cell 10 from flowing into the gap or an electrolyte inside the battery cell 10 from leaking through the gap. Furthermore, the second gasket 430b may include an insulating material (e.g., a polymer).

Although not illustrated in the drawings, a second terminal insulator for electrically separating the second terminal portion 411b from the second cap plate 420b may be disposed between the second terminal portion 411b and the second cap plate 420b. However, in some embodiments, when the second terminal portion 411b and the second cap plate 420b do not need to be insulated from each other, the second terminal insulator may be omitted as illustrated in FIG. 4, and in this case, the second terminal portion 411b and the second cap plate 420b may be in contact with each other.

An insulating member for preventing the second cap plate 420b from being unintentionally short-circuited with a component accommodated in the case 300 (e.g., the electrode assembly 100) may be disposed on a rear surface of the second cap plate 420b. For example, referring to FIG. 4, in the second cap assembly 400b, the second cap insulator 440b covering the rear surface of the second cap plate 420b may correspond to such an insulating member (here, the 'rear surface of the second cap plate 420b' may denote a surface facing from the second cap plate 420b to the internal space S of the case 300). The second cap insulator 440b may include an insulating material to prevent the second cap plate 420b from being short-circuited in contact with the electrode assembly 100.

The second cap assembly 400b may further include a second fixing member 460b coupled to the second rivet 412b. The second fixing member 460b may be disposed on a rear surface of the second cap plate 420b and may be coupled to an end of the second rivet 412b. The second fixing member 460b may be configured to have a width greater than a hole through which the second rivet 412b passes in the second cap plate 420b. Here, the 'width' may denote a length in a direction, perpendicular to the first direction (Z-axis direction), which is a direction in which the second rivet 412b penetrates through the second cap plate 420b. The second fixing member 460b may be coupled to an end of the second rivet 412b penetrating through the second cap assembly 400b, thereby preventing the components constituting the second cap assemblies 400b from being separated from each other.

At least one of a plurality of cap assemblies 400a and 400b may include an electrolyte inlet 421 used to inject an electrolyte into the case 300. For example, referring to FIGS. 3 and 4, the first cap assembly 400a and the second cap assembly 400b may include the electrolyte inlet 421.

The electrolyte inlet 421 may be provided on the cap plates 420a and 420b. For example, the electrolyte inlet 421 may have a hole shape penetrating through the cap plates 420a and 420b.

An avoiding hole 441 may also be provided in the cap insulators 440a and 440b disposed on rear sides of the cap plates 420a and 420b to correspond to positions of the electrolyte inlets of the cap plates 420a and 420b. The avoiding hole 441 of the cap insulators 440a and 440b may be sufficiently large so as not to disturb an injection of the electrolyte through the electrolyte inlet 421.

After injecting the electrolyte, the electrolyte inlet 421 may be sealed with a stopper 422. The stopper 422 may have a shape of being inserted into the electrolyte inlet 421. The stopper 422 may be fitted and coupled to the electrolyte inlet 421. The stopper 422 may block the electrolyte inlet 421 to prevent the electrolyte in the case 300 from leaking to the outside of the battery cell 10.

The electrolyte inlet 421 may be provided in both the first cap assembly 400a and the second cap assembly 400b, or can be provided in only one cap assembly.

In some embodiments, the first cap plate 420a, the first terminal portion 411a, the second cap plate 420b, and the second terminal portion 411b may be all formed of the same material, and in this case, the case 300 may also be formed of the same material.

The first terminal 410a of the first cap assembly 400a and the second terminal 410b of the second cap assembly 400b may be configured to have different polarities. For example, in the battery cell 10, the first terminal 410a may be electrically connected to negative pole plates, and the second terminal 410b may be electrically connected to positive pole plates. (Or vice versa.)

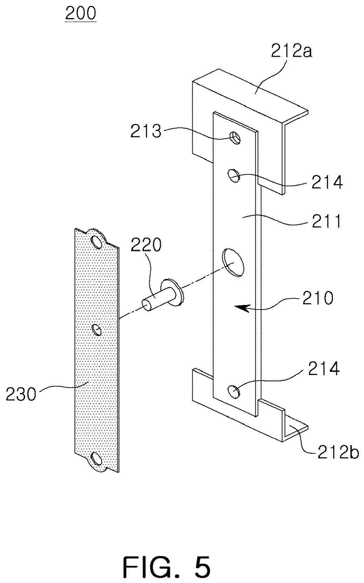

Hereinafter, a protective assembly 200 of the battery cell 10 will be described in detail with reference to FIGS. 5 to 7.

FIG. 5 is an exploded perspective view of the protective assembly 200.

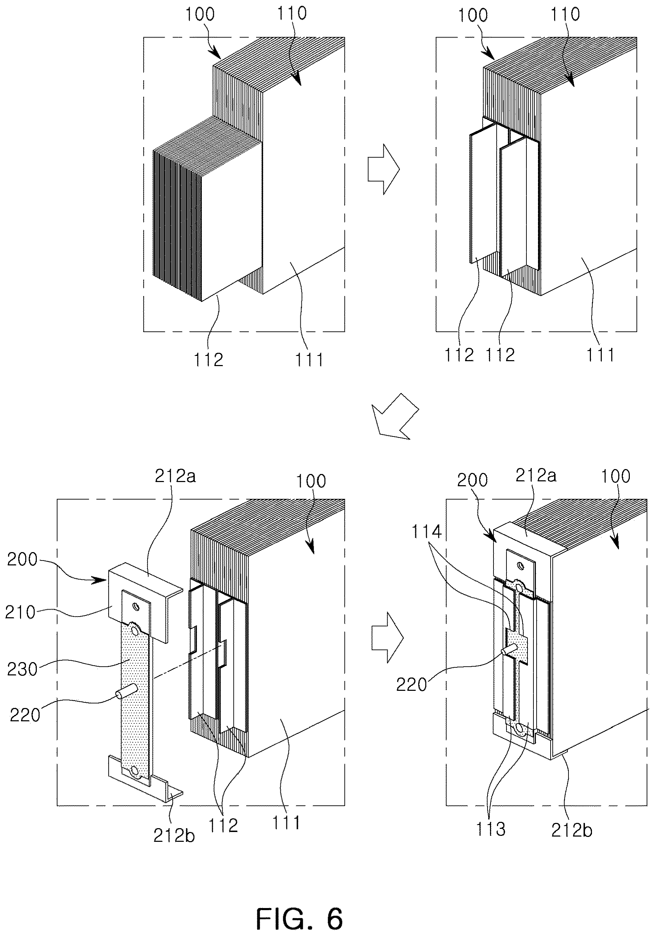

FIG. 6 is a reference view illustrating a state in which an electrode assembly and a protective assembly 200 are coupled.

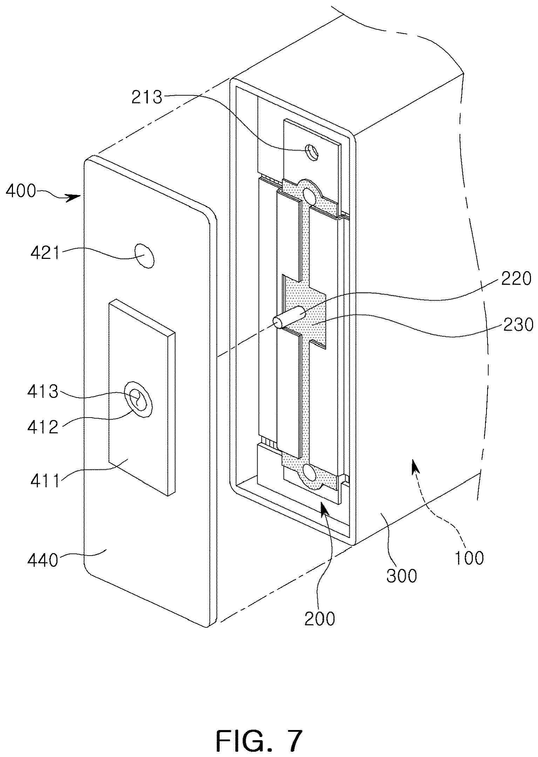

FIG. 7 is a reference view illustrating a state in which a cap assembly is coupled to a case.

Since a battery cell and components thereof described in FIGS. 5 to 7 correspond to the battery cell and the components thereof described in FIGS. 1 to 4, a redundant description thereof may be omitted. For example, a protective assembly 200 of FIGS. 5 to 7 may correspond to the protective assembly 200 described in FIGS. 1 and 2.

The protective assembly 200 may include a current collecting member 230 electrically connected to an uncoated portion 112, a connection member 220 protruding from the current collecting member 230, and a protective frame 210 supporting the current collecting member 230 and the connection member 220.

The protective frame 210 may be disposed on at least one side of the electrode assembly to protect the electrode assembly.

The protective frame 210 may include a material absorbing impacts in order to prevent the electrode assembly from being damaged by impacts outside a battery cell. Furthermore, the protective frame 210 may include an insulating material in order to prevent the electrode assembly from being short-circuited in contact with a case. Specifically, the protective frame 210 may be stably disposed around the electrode assembly, by including a material that does not react with an electrolyte. For example, the protective frame 210 may include a non-conductive metal, plastic, or a polymer resin material. However, the material of the protective frame 210 is not limited to those described above.

The protective frame 210 may include a body portion 211 to which the current collecting member 230 is coupled, and one or more bend portions 212 extending from the body portion 211 to protect edges of the electrode assembly.

The body portion 211 of the protective frame 210 may be disposed to face at least a portion of the electrode assembly in the first direction.

The body portion 211 may be provided in a structure having different widths in a height direction so that the uncoated portion of the electrode assembly may pass therethrough. Referring to FIG. 5, for example, a width of an upper end and a width of a lower end of the body portion 211 may be wider than a width of an intermediate end of the body portion 211. According to such a structure, the upper end and the lower end of the body portion 211 sufficiently may cover and protect one side of the electrode assembly, and at the same time, the uncoated portion of the electrode assembly may be released by the intermediate end of the body portion 211, thereby closely attaching the protective frame 210 to one side of the electrode assembly.

The protective frame 210 may include one or more bend portions 212 connected to the body portion 211. The bend portion 212 may face at least a portion of the electrode assembly 100 in a second direction different from the first direction. For example, the second direction may be a direction, perpendicular to the first direction.

Referring to FIG. 5, the protective frame 210 may include a first bend portion 212a extending from one side of the body portion 211 and a second bend portion 212b extending from the other side of the body portion 211. For example, the first bend portion 212a and the second bend portion 212b may extend from the body portion 211 in both ends of the body portion 211 in a vertical direction.

The body portion 211 and the first bend portion 212a may cover at least a portion of one edge of the electrode assembly. The body portion 211 and the second bend portion 212b may cover at least a portion of the other one edge of the electrode assembly.

The current collecting member 230 may be coupled to the protective frame 210. The current collecting member 230 may be supported by the protective frame 210 and may be stably connected to the electrode assembly.

The current collecting member 230 is a plate-shaped member including a conductive metal and may be electrically connected to the uncoated portion 112 of the electrode assembly 100 to form a passage for a current flow between the electrode assembly 100 and a terminal 410.

The current collecting member 230 may be fixed to a front surface of the body portion 211 of the protective frame 210. Here, the front surface of the body portion 211 may refer to a surface facing the cap assembly 400 from the body portion 211. Various coupling methods may be applied to coupling the current collecting member 230 and the protective frame 210. For example, the body portion 211 may be provided with a coupling protrusion 214 configured to penetrate through the current collecting member 230, and the coupling protrusion 214 may be thermally fused in a state of passing through the current collecting member 230, thus fixing the current collecting member. Alternatively, the current collecting member 230 and the body portion 211 may be fixed to each other by a bonding material such as a bonding binder.

The current collecting member 230 may include a material having better mechanical rigidity than a material constituting the protective frame 210. For example, the protective frame 210 may include a plastic or a resin material, and the current collecting member 230 may include a conductive metal material.

As the current collecting member 230 including a metallic material is coupled to the protective frame 210, structural rigidity thereof may be further increased as compared to a case in which the protective frame 210 and the current collecting member 230 are disposed alone.

Furthermore, the protective frame 210 covering one side of the electrode assembly 100 may stably support the current collecting member 230, thereby stably maintaining an electrical connection between the current collecting member 230 and the electrode assembly 100.

Furthermore, as the current collecting member 230 is fixed to the protective frame 210, a relative position thereof with the electrode assembly may be fixed, thereby increasing easiness of a connection between the electrode assembly 100 and the current collecting member 230.

Meanwhile, the protective frame 210 may be disposed to surround a partial surface of the current collecting member 230, and accordingly, only a specific portion of the current collecting member 230 may be connected to the uncoated portion 112.

The connection member 220 may be configured to protrude from one surface of the current collecting member 230 in a direction oriented toward an external periphery of the electrode assembly 100. For example, the connection member 220 may be provided in a pin-shaped structure penetrating through the current collecting member 230, and at least a portion thereof may protrude from one surface of the current collecting member 230 in a first direction in which the cap assembly 400 is assembled.

At least a portion of the connection member 220 may be in contact with the current collecting member 230, and the other portion thereof may be in contact with a terminal 410 of the cap assembly 400.

The connection member 220 includes a conductive material, and may electrically connect the current collecting member 230 and the terminal 410 of the cap assembly 400.

When the plate-shaped member is disposed on one side of the electrode assembly 100, there may be a problem that the electrolyte may be prevented from flowing in the case 300.

To prevent such a problem, the protective assembly 200 according to some embodiments may include a through-hole 213 through which an electrolyte passes. For example, referring to FIGS. 5 and 7, the through-hole 213 of the protective frame 210 may be provided in the form of a hole penetrating through the body portion 211 and extending from one side of the protective frame 210 to the other side of the protective frame 210.

During a manufacturing process of the battery cell 10, at least a portion of the electrolyte injected from the outside of the case may flow into the electrode assembly 100 through the through-hole 213 of the protective frame 210. That is, the through-hole 213 of the protective frame 210 may allow the electrolyte to be smoothly injected thereinto.

The through-hole 213 of the protective assembly 200 may be disposed to face the electrolyte inlet 421 of the cap assembly 400. For example, the through-hole 213 and the electrolyte inlet 421 may face each other in the first direction as a coupling direction of the cap assembly 400 and the case 300.

As the through-hole 213 is disposed in the protective assembly 200, the electrolyte introduced from the electrolyte inlet 421 may flow smoothly into the case 300 by passing through the through-hole 213.

FIG. 6 may sequentially illustrate a process in which the electrode assembly 100 and the protective assembly 200 are connected to each other during the manufacturing process of the battery cell 10.

Referring to an upper left end of FIG. 6, the electrode assembly 100 may include a plurality of pole plates 110 stacked in one direction. At least one of the plurality of pole plates 110 may include a coated portion 111 coated with an active material and an uncoated portion 112 not coated with the active material. In the process of stacking or winding the plurality of pole plates 110, the uncoated portions 112 may be aligned side by side at predetermined positions.

The uncoated portion 112 may be electrically connected to the terminals 410a and 410b of the cap assemblies 400a and 400b through the protective assembly 200 to serve as a passage for a current flow between the electrode assembly 100 and the terminals 410a and 410b.

In the electrode assembly 100, the uncoated portions 112 may be configured to extend from one side of the coating part 111. In this case, uncoated portions of a positive pole plate may be disposed side by side on one side of the electrode assembly 100, and uncoated portions of a negative pole plate may be disposed side by side on the other side, opposite to one side of the electrode assembly 100. For example, all of the uncoated portions 112 illustrated in an upper left end of FIG. 6 may have the same polarity.

Referring to thane upper right end of FIG. 6, the uncoated portions 112 having the same polarity may be in contact with and connected to each other. If necessary, at least a portion of the uncoated portions 112 may be folded to come into contact with other neighboring uncoated portions 112.

Referring to a lower left end of FIG. 6, the uncoated portions 112 having the same polarity may be bound to each other to form a plurality of aggregates, and the protective assembly 200 may be seated and assembled between the aggregates of the uncoated portions 112. In the protective assembly 200, at least a portion of the protective frame 210 may face the electrode assembly 100 in the first direction, but each of the first bend portion 212a and the second bend portion 212b of the protective frame 210 may be disposed to cover different edges of the electrode assembly 100. Here, the first direction may be a direction in which the uncoated portion 112 extends from the coating portion 111 of the electrode assembly 100.

After the protective assembly 200 is seated, the current collecting member 230 of the protective assembly 200 may be electrically connected to the uncoated portion 112.

Referring to a lower right end of FIG. 6, at least a portion of the uncoated portion 112 may be bent to form a junction portion 113, and the junction portion 113 may cover at least a portion of a front surface of the current collecting member 230. Here, the front surface of the current collecting member 230 may refer to a surface facing the cap assembly 400 from the current collecting member 230.

The junction portion 113 of the uncoated portion 112 and the current collecting member 230 may be electrically connected to each other. For example, the junction portion 113 of the uncoated portion 112 and the current collecting member 230 may be in contact with each other and may be electrically connected each other by means of a welding and jointing manner.

A welding process may be performed through a front surface of the junction portion 113 in a state in which the junction portion 113 covers a front surface of the current collecting member 230. In this case, the current collecting member 230 may be disposed on a rear surface of the junction portion 113, thereby preventing damage to an interior of the electrode assembly 100 by the welding process.

A laser welding method may be applied to a junction of the uncoated portion and the connection unit. However, in addition to the laser welding method, any connecting method may be applied as long as it can electrically connect the uncoated portion to the connection unit.

The uncoated portion 112 of the electrode assembly 100 may include an avoiding portion 114 to avoid interference with the connection member 220. For example, referring to FIG. 6, a portion of the uncoated portion 112 may be cut to form the avoiding portion 114, thereby avoiding the interference with the connection member 220 in the process of bending the uncoated portion 112 to cover at least a portion of the protective assembly 200.

The electrode assembly 100 connected to the protective assembly 200 may be accommodated into the case 300 and may be electrically connected to the terminals 410a and 410b of the cap assemblies 400a and 400b. For example, referring to FIG. 7, in a state in which the electrode assembly 100 is accommodated into the case 300, the cap assembly 400 may be assembled in the case 300, and in this process, the connection member 220 may be inserted into the terminals 410a and 410b of the cap assemblies 400a and 400b. The cap assembly 400 illustrated in FIG. 7 may correspond to either the first cap assembly 400a or the second cap assembly 400b illustrated in FIGS. 1 to 4.

As the cap assembly 400 is coupled to the case 300, the electrode assembly 100 may be electrically connected to the current collecting member 230, the connection member 220, and the terminals 410a and 410b.

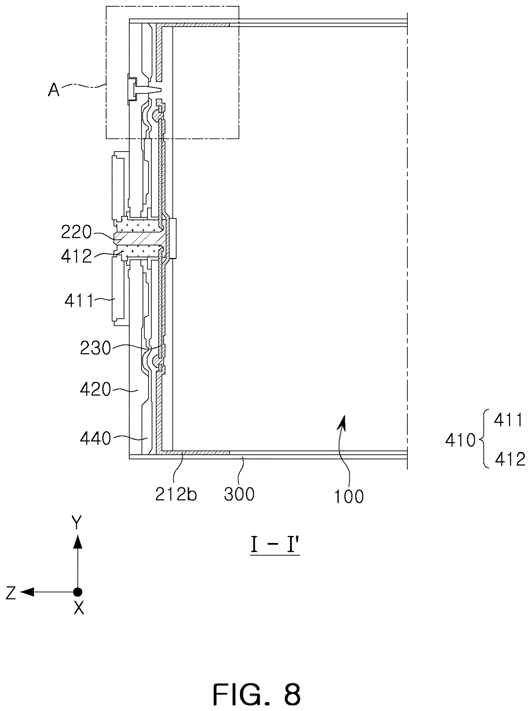

Hereinafter, a cross-sectional configuration of a battery cell 10 on a cap assembly 400 will be described with reference to FIGS. 8 to 10.

FIG. 8 is a cross-sectional view of part I-I' of FIG. 1.

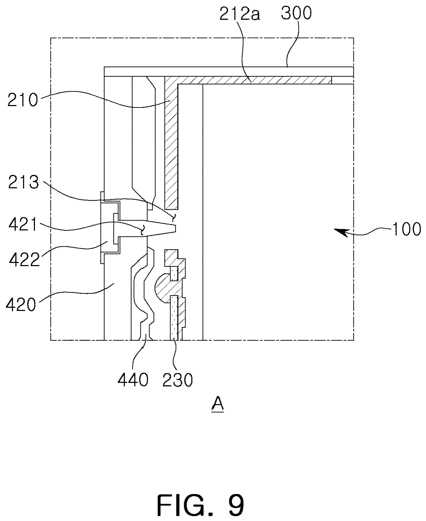

FIG. 9 is an enlarged view of part A of FIG. 8.

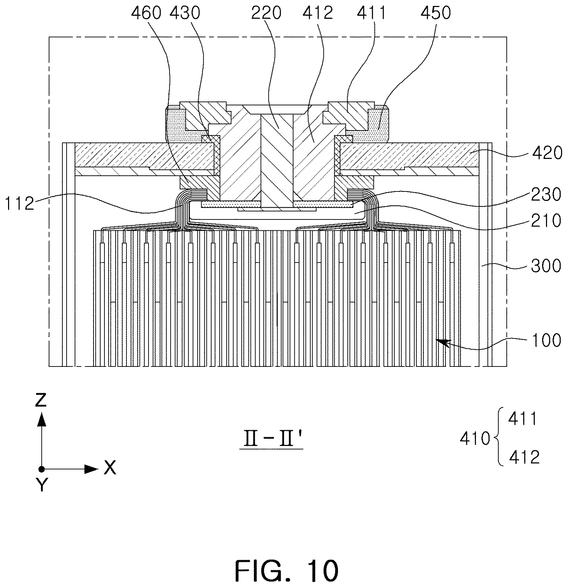

FIG. 10 is a cross-sectional view of part II-II' of FIG. 1.

Since a battery cell 10 and components thereof described in FIGS. 8 to 10 correspond to the battery cell 10 and the components thereof described in FIGS. 1 to 7, a redundant description thereof may be omitted. For example, a cap assembly 400 described in FIGS. 8 to 10 may correspond to any one of the first cap assembly 400a and the second cap assembly 400b described in FIGS. 1 to 7.

The cap assembly 400 of the battery cell 10 may be coupled to a case 300 in the first direction (Z-axis direction), and accordingly, a terminal 410a of the cap assembly 400 may be electrically connected to an electrode assembly 100 through a connection member 220.

A protective assembly 200 may include a current collecting member 230 electrically connected to an uncoated portion 112 of the electrode assembly 100, a connection member 220 electrically connected to the current collecting member 230, and a protective frame 210 surrounding at least a portion of the current collecting member 230.

The connection member 220 may be configured to extend in a direction oriented toward the cap assembly 400 by penetrating through the current collecting member 230.

The connection member 220 may be provided as a separate member assembled to the current collecting member 230, or may be provided integrally with the current collecting member 230.

The current collecting member 230 and the connection member 220 may be formed of the same material as a material forming the uncoated portion 112 connected to the current collecting member 230. For example, when the uncoated portion 112 connected to the current collecting member 230 is formed of copper or a copper alloy, the current collecting member 230 and the connection member 220 may be formed of copper or a copper alloy identically thereto. Alternatively, when the uncoated portion 112 connected to the current collecting member 230 is formed of aluminum or an aluminum alloy, the current collecting member 230 and the connection member 220 may be formed of aluminum or an aluminum alloy identically thereto. However, the materials of the current collecting member 230 and the connection member 220 are not limited to the aforementioned description, and may be formed of, for example, a material different from the uncoated portion 112 connected to the current collecting member 230.

The protective frame 210 includes an insulating material and may be disposed between the current collecting member 230 and the uncoated portion 112. The protective frame 210 may cover a partial surface (e.g., a rear surface) of the current collecting member 230 so that only a specific portion of the current collecting member 230 may be connected to the uncoated portion 112.

The terminal 410a of the cap assembly 400 may be electrically connected to the connection member 220.

The terminal 410a may include a terminal portion 411 exposed to the outside of the cap assembly 400 and a rivet 412 coupled to the terminal portion 411.

The rivet 412 may include an insertion hole 413 into which the connection member 220 is inserted. The connection member 220 may be welded and coupled while being inserted into the insertion hole 413. For example, in a state in which the connection member 220 is inserted into the insertion hole 413, an upper end thereof may be exposed to the outside of the battery cell 10, and through the upper end, a contact portion between the connection member 220 and the rivet 412 may be welded to bond the connection member 220 and the rivet 412 to each other.

A width of the insertion hole 413 of the rivet 412 may have a size corresponding to a thickness of the connection member 220.

The rivet 412 may further include a guide groove for guiding an insertion position of the connection member 220. For example, the guide groove may have a shape of an inclined surface formed in an inlet of the insertion hole 413. Accordingly, even if the insertion hole 413 has a size that fits the connection member 220, the upper end of the connection member 220 may easily enter the insertion hole 413 along the inclined surface of the guide groove, thereby increasing assembly easiness.

An end of the rivet 412 may be inserted into an avoiding portion 114 provided to avoid the connection member 220 in the uncoated portion 112. For example, in a state in which the cap assembly 400 is coupled to the case 300, the end of the rivet 412 may be disposed adjacently to the current collecting member 230 exposed through the avoiding 114. According to such a structure, the cap assembly 400 and the electrode assembly 100 may be brought into close contact with each other to increase space efficiency.

In some embodiments, a material constituting the rivet 412 may be the same as a material constituting the connection member 220 inserted into the rivet 412. For example, when the connection member 220 includes copper, the rivet 412 may also include copper. As the rivet 412 and the connection member 220 are formed of the same material, coupling easiness and bonding reliability by means of welding between the rivet 412 and the connection member 220 may be further increased.

In this case, a material constituting the rivet 412 and a material constituting the terminal portion 411 may be different from each other. For example, the rivet 412 may include copper or may be formed in a form in which nickel is plated on copper, and the terminal portion 411 may include aluminum.

Since the connection member 220 is connected to the terminal portion 411 through the rivet 412 formed of the same material, coupling easiness and coupling reliability may be increased as compared to when directly coupled to the terminal portion 411 formed of a different material.

In other words, the rivet 412 directly connected to the connection member 220 may be formed of the same material as the connection member 220, and the terminal portion 411 may be formed a material different from the rivet 412 and the connection member 220, thereby increasing the degree of freedom of material selection of the terminal portion 410 as well as securing connection easiness and connection stability.

A through-hole 213 of the protective assembly 200 may be disposed to face an electrolyte inlet 421 of the cap assembly 400. For example, referring to FIGS. 8 and 9, the through-hole 213 and the electrolyte inlet 421 may face each other in the first direction (Z-axis direction).

An electrolyte injected into the case through the electrolyte inlet provided in the cap plate may flow into the electrode assembly by penetrating through the through-hole 213 of the protective frame 210.

After the injection of the electrolyte is completed, the electrolyte inlet may be closed by a stopper 422. FIGS. 8 and 9, one end of the stopper 422 may pass through the electrolyte inlet and reach the through-hole 213 of the protective frame 210. However, a specific shape of the stopper 422 is not limited to those illustrated in the drawings.

Meanwhile, a shape and a size of the electrolyte inlet and the through-hole 213 may be variously formed. For example, the through-hole 213 may be formed to be the same as or larger than the electrolyte inlet. For example, the through-hole 213 may have a circular or elliptical hole shape, or may have a slit shape.

If necessary, a plurality of electrolyte inlets and a plurality of through-holes 213 may be provided. For example, a plurality of through-holes 213 may be provided in a portion of the protective frame 210 facing the electrolyte inlet.

In the drawings, although the through-hole 213 is illustrated in the shape of a simple hole penetrated in the first direction (Z-axis direction), this is only an example, and a specific shape of the through-hole 213 may be different from that illustrated in the drawings. For example, the through-hole 213 may be provided in the shape of a hole having a path extending in an inclined direction in the first direction, or may be provided in the shape of a hole having a curved path more than once from one surface to the other surface of the protective frame 210.

In some embodiments, the battery cell 10 includes a protective assembly 200 disposed on at least one side of the electrode assembly 100, thereby safely protecting the electrode assembly from impacts applied to the battery cell 10.

Furthermore, the protective assembly 200 may include an insulating material and a material that does not react with an electrolyte by preventing the electrode assembly 100 from being unintentionally short-circuited with the case 300.

Furthermore, the protective assembly 200 may be used as a protective structure having high structural rigidity by including a current collecting member including a metallic material.

Furthermore, the protective assembly 200 may include a connection member 220 inserted into a terminal 410 of the cap assembly 400 to concisely and stably connect the electrode assembly 100 and the terminal 410, and a space for connecting the electrode assembly 100 and the terminal 410 may be reduced, thereby increasing energy density of the battery cell 10.

The content described above is merely an example in which the principle of the disclosed technology is applied, and other configurations may be further included without departing from the scope of the disclosed technology. Therefore, it will be apparent to those skilled in the art that modifications and variations could be made without departing from the scope of the disclosed technology as defined by the appended claims. In addition, some components may be deleted and implemented in the above-described example embodiments, and each of the embodiments may be combined and implemented with each other.

## Claims

1. A battery cell comprising:
an electrode assembly including a plurality of pole plates;
one or more protective assemblies disposed on at least one side of the electrode assembly; and
a case having an internal space in which the electrode assembly is accommodated,
wherein the one or more protective assemblies comprise:
a protective frame including an insulating material; and
a connection unit coupled to the protective frame and electrically connected to the electrode assembly.

2. The battery cell of claim 1, further comprising:
a cap assembly coupled to the case and having a terminal disposed therein,
wherein the connection unit is electrically connected to the terminal and the electrode assembly, respectively.

3. The battery cell of claim 2, wherein the connection unit comprises:
a current collecting member electrically connected to the electrode assembly; and
a connection member configured to electrically connect the current collecting member and the terminal.

4. The battery cell of claim 3, wherein the protective frame includes a coupling protrusion inserted into the current collecting member.

5. The battery cell of any one of claims 3 or 4, wherein the current collecting member includes a material having rigidity higher than that of the insulating material of the protective frame.

6. The battery cell of any one of claims 3 to 5, wherein at least a portion of the connection member is inserted into the terminal.

7. The battery cell of any one of claims 2 to 6, wherein the terminal comprises:
a rivet having an insertion hole into which the connection member is inserted; and
a terminal portion to which the rivet is coupled.

8. The battery cell of claim 7, wherein the rivet and the terminal portion are formed of different materials.

9. The battery cell of any one of claims 3 to 8, wherein the electrode assembly further comprises an uncoated portion which is not coated with an active material, and
the uncoated portion is electrically connected to the current collecting member.

10. The battery cell of claim 9, wherein at least a portion of the uncoated portion is disposed between the current collecting member and the cap assembly.

11. The battery cell of any one of claims 1 to 10, wherein the protective frame includes a through-hole through which an electrolyte passes.

12. The battery cell of claim 11, wherein the cap assembly comprises an electrolyte inlet into which the electrolyte is injected,
wherein the electrolyte inlet is disposed to face the through-hole.

13. The battery cell of any one of claims 1 to 12, wherein the protective frame comprises:
a body portion facing the electrode assembly in a first direction; and
one or more bend portions extending from the body portion and facing the electrode assembly in a second direction, perpendicular to the first direction.

14. The battery cell of claim 13, wherein the one or more bend portions are disposed to cover edges of the electrode assembly.

15. The battery cell of any one of claims 1 to 14, further comprising:
a first cap assembly and a second cap assembly coupled to both sides of the case,
wherein the one or more protective assemblies comprise:
a first protective assembly facing the first cap assembly and a second protective assembly facing the second cap assembly.
